# EUROPEAN PATENT SPECIFICATION

(11) **EP 2 938 429 B1**
(45) Date of publication and mention of the grant of the patent: **28.02.2018**
(21) Application number: 13867193.8
(22) Date of filing: 12.12.2013
(51) Int. Cl.: B01J 13/14, B01J 13/18

(54) **MICROCAPSULE PARTICLES**
MIKROKAPSELPARTIKEL
PARTICULES DE MICROCAPSULE

(30) Priority: 27.12.2012 US 201261746185 P
(43) Date of publication of application: 04.11.2015
(73) Proprietor: ENCAPSYS, LLC, Appleton, WI 54915 (US)
(72) Inventor: SCHWANTES, Todd Arlin, Lena, WI 54139 (US)
(74) Representative: Carpmaels & Ransford LLP
(86) International application number: PCT/US2013/074633
(87) International publication number: WO 2014/105440

(56) References cited:
- WO-A1-2008/058868
- WO-A2-02/20683
- WO-A2-2008/061885
- WO-A2-2011/084141
- US-A1- 2003 195 274
- US-A1- 2004 265 589
- US-A1- 2005 020 786
- US-A1- 2006 263 519
- US-A1- 2009 274 905
- US-A1- 2009 274 907
- US-A1- 2010 255 309
- US-A1- 2010 304 023
- US-A1- 2012 148 845
- US-B1- 6 232 266
- US-B2- 7 572 397

## Description

### FIELD OF THE INVENTION

This invention relates to capsule manufacturing processes and microcapsules produced by such processes.

### DESCRIPTION OF THE RELATED ART

Various processes for microencapsulation, and exemplary methods and materials are set forth in Schwantes (U.S. 6,592,990), Nagai et. al. (U.S. 4,708,924), Baker et. al. (U.S. 4,166,152), Wojciak (U.S. 4,093,556), Matsukawa et. al. (U.S. 3,965,033), Matsukawa (U.S. 3,660,304), Ozono (U.S. 4,588,639), Irgarashi et. al. (U.S. 4,610,927), Brown et. al. (U.S. 4,552,811), Scher (U.S. 4,285,720), Shioi et. al. (U.S. 4,601,863), Kiritani et. al. (U.S. 3,886,085), Jahns et. al. (U.S. 5,596,051 and 5,292,835), Matson (U.S. 3,516,941), Chao (U.S. 6,375,872), Foris et. al. (U.S. 4,001,140; 4,087,376; 4,089,802 and 4,100,103), Greene et. al. (U.S. 2,800,458; 2,800,457 and 2,730,456), Clark (U.S. 6,531,156), Saeki et. al. (U.S. 4,251,386 and 4,356,109), Hoshi et. al. (U.S. 4,221,710), Hayford (U.S. 4,444,699), Hasler et. al. (U.S. 5,105,823), Stevens (U.S. 4,197,346), Riecke (U.S. 4,622,267), Greiner et. al. (U.S. 4,547,429), and Tice et. al. (U.S. 5,407,609), among others and as taught by Herbig in the chapter entitled "Microencapsulation" in Kirk-Othmer Encyclopedia of Chemical Technology, V.16, pages 438-463.

More particularly, U.S. Pat. Nos. 2,730,456; 2,800,457; and 2,800,458 describe methods for capsule formation. Other useful methods for microcapsule manufacture are: U.S. Pat. Nos. 4,001,140; 4,081,376 and 4,089,802 describing a reaction between urea and formaldehyde; U.S. Pat. No. 4,100,103 describing reaction between melamine and formaldehyde; British Pat. No. 2,062,570 describing a process for producing microcapsules having walls produced by polymerization of melamine and formaldehyde in the presence of a styrenesulfonic acid. Forming microcapsules from urea-formaldehyde resin and/or melamine formaldehyde resin is disclosed in U.S. Pat. Nos. 4,001,140; 4,081,376, 4,089,802; 4,100,103; 4,105,823; and 4,444,699. Alkyl acrylate-acrylic acid copolymer capsules are taught in U.S. Patent No. 4,552,811.

Interfacial polymerization is a process wherein a microcapsule wall of a polyamide, an epoxy resin, a polyurethane, a polyurea or the like is formed at an interface between two phases. U.S. Pat. No. 4,622,267 discloses an interfacial polymerization technique for preparation of microcapsules. The core material is initially dissolved in a solvent and an aliphatic diisocyanate soluble in the solvent mixture is added. Subsequently, a nonsolvent for the aliphatic diisocyanate is added until the turbidity point is just barely reached. This organic phase is then emulsified in an aqueous solution, and a reactive amine is added to the aqueous phase. The amine diffuses to the interface, where it reacts with the diisocyanate to form polymeric polyurethane shells. A similar technique, used to encapsulate salts which are sparingly soluble in water in polyurethane shells, is disclosed in U.S. Pat. No. 4,547,429.

U.S. Pat. No. 3,516,941 teaches polymerization reactions in which the material to be encapsulated, or core material, is dissolved in an organic, hydrophobic oil phase which is dispersed in an aqueous phase. The aqueous phase has dissolved materials forming aminoplast resin which upon polymerization form the wall of the microcapsule. A dispersion of fine oil droplets is prepared using high shear agitation. Addition of an acid catalyst initiates the polycondensation forming the aminoplast resin within the aqueous phase, resulting in the formation of an aminoplast polymer which is insoluble in both phases. As the polymerization advances, the aminoplast polymer separates from the aqueous phase and deposits on the surface of the dispersed droplets of the oil phase to form a capsule wall at the interface of the two phases, thus encapsulating the core material. Urea-formaldehyde (UF), urea-resorcinol-formaldehyde (URF), urea-melamine-formaldehyde (UMF), and melamine-formaldehyde (MF), capsule formations proceed in a like manner. In interfacial polymerization, the materials to form the capsule wall are in separate phases. Polymerization occurs at the phase boundary. Thus, a polymeric capsule shell wall forms at the interface of the two phases thereby encapsulating the core material. Wall formation of polyester, polyamide, and polyurea capsules typically proceeds via interfacial polymerization.

U.S. Patent 5,292,835 teaches polymerizing esters of acrylic acid or methacrylic acid with up to two other bi- or polyfunctional monomers. Specifically illustrated are reactions of polyvinylpyrrolidone with acrylates such as butanediol diacrylate or methylmethacrylate together with a free radical initiator and another monomer.
US 2009/274905 A1 discloses a cationically charged or neutral microcapsule particle comprising an oil soluble or dispersible core material and a wall material at least partially surrounding the core material, the microcapsule wall material comprising the reaction product of a first composition in the presence of a second composition comprising an emulsifier which is cationic or nonionic, the first composition comprising a reaction product selected from the group consisting of A) a reaction product of i) an oil-soluble or dispersible amine acrylate or methacrylate with ii) a multifunctional acrylate or methacrylate monomer or oligomer, and iii) an oil-soluble acid and an initiator, B) a reaction product of i) an oil soluble or dispersible acid acrylate or methacrylate with ii) a multifunctional acrylate or methacrylate monomer or oligomer, and iii) an oil-soluble base and an initiator, C) a reaction product of i) an oil-soluble or dispersible amine acrylate or methacrylate with ii) a multifunctional acrylate or methacrylate monomer or oligomer, and iii) a water-soluble acid and an initiator, and D) a reaction product of i) an oil-soluble or dispersible acid acrylate or methacrylate with ii) a multifunctional acrylate or methacrylate monomer or oligomer, and iii) a water-soluble base and an initiator.

Common microencapsulation processes can be viewed as a series of steps. First, the core material which is to be encapsulated is typically emulsified or dispersed in a suitable dispersion medium. This medium is typically aqueous but involves the formation of a polymer rich phase. Most frequently, this medium is a solution of the intended capsule wall material. The solvent characteristics of the medium are changed such as to cause phase separation of the wall material. The wall material is thereby contained in a liquid phase which is also dispersed in the same medium as the intended capsule core material. The liquid wall material phase deposits itself as a continuous coating about the dispersed droplets of the internal phase oil and capsule core material. The wall material is then solidified. This process is commonly known as coacervation.

Microcapsules can be useful to deliver a desired core material to various surfaces or other compositions.

Although encapsulation of various materials is known in the art, a need exists for capsules and particles which are durable, have low leakage, are safe for use in various applications, and/or are able to encapsulate a variety of materials. These and other embodiments are set forth in the invention specification herein.

### SUMMARY OF THE INVENTION

The microcapsules of the present invention comprise a population of microcapsule particles comprising an oil soluble or dispersible core material and a wall material at least partially surrounding the core material. The microcapsule wall material consists of the reaction product of a first composition in the presence of a second composition; the first composition comprises a water phase. The water phase comprises an aqueous solution of a water soluble or dispersible initiator having at least one -COOH or amine functional group and an emulsifier, the emulsifier comprising a water soluble or dispersible material at a pH from 4 to 12. The water soluble or dispersible initiator is selected from initiators having a C-N=N-C type structure and amine or carboxyl functionality, the initiators selected from the group of initiators consisting of formulas I, II and III; 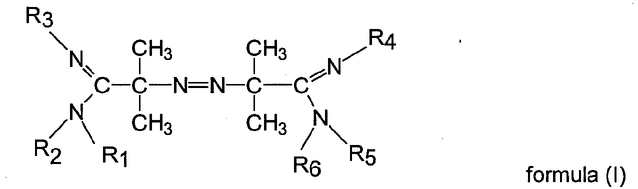 wherein R₂, R₃, R₄ and R₅ are each independently selected from hydrogen, alkylcarboxy, or, R₂ and R₃ together are from two to four carbons and form a cyclic structure, and R₄ and R₅ together are from two to four carbons and form a cyclic structure; wherein R₁ and R₆ are each hydrogen with the proviso that when R₃ and R₄ are hydrogen, R₁ and R₆ are each a four carbon cyclic ring structure or, 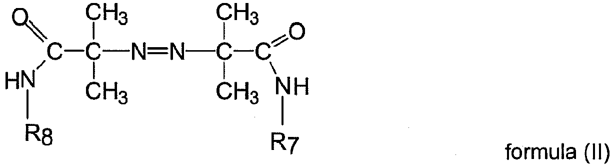 wherein each of R₇ and R₈ is each independently alkylhydroxy of from one to three hydroxyl moieties and the alkyl moiety being of from C₁ to C₇,
or, 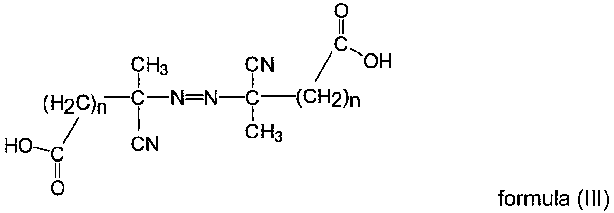 wherein n is an integer from 1 to 5.

The second composition comprises an oil phase. More particularly, the oil phase comprises: i) one or more multi functional acrylate or methacrylate monomers or oligomers and substantially free of amine acrylate or amine methacrylate, and an initiator soluble or dispersible in the oil phase; ii) from 0 to 10% by weight, of the oil phase, of a monofunctional acrylate or methacrylate monomer or oligomer; iii) an intended core material; and iv) a diluent.

The ratio of the water phase initiator to multifunctional acrylate or methacrylate is from 0.1:99.9 to 20:80 by weight. The ratio of the diluent to the core material is from 0.1:99.9 to 90:10 on a weight basis. The reaction product of the first composition and second composition results in the formation of a population of microcapsules.

The capsules according to the invention are useful with a wide variety of capsule contents ("core materials") including, by way of illustration and without limitation, internal phase oils, solvent oils, phase change materials, dyes, perfumes, fragrances, cleaning oils, polishing oils, flavorants, nutrients, sweeteners, chromogens, pharmaceuticals, fertilizers, herbicides, biological actives, scents, and the like. The microcapsule core materials can include materials which alter rheology or flow characteristics, or extend shelf life or product stability. Essential oils as core materials can include, for example, by way of illustration wintergreen oil, cinnamon oil, clove oil, lemon oil, lime oil, orange oil, peppermint oil and the like. Dyes can include fluorans, lactones, indolyl red, I6B, leuco dyes, all by way of illustration and not limitation. The core material should be dispersible or sufficiently soluble in the capsule internal phase material namely in the internal phase oil or soluble or dispersible in the monomers or oligomers solubilized or dispersed in the internal phase oil. The core materials are preferably liquid but can be solid depending on the materials selected, and with temperatures appropriately adjusted to effect dispersion.

Preferably the capsule core materials include a diluent. The diluent can be selected from one or more of various glycerides, monoacylglycerols, diglycerides, triglycerides, and alkyl esters of fatty acids derived from transesterification of vegetable oil(s). Triglycerides are esters of glycerol and three fatty acids. The fatty acids of the mono-, di- or tri-glycerides can be saturated or unsaturated. Each fatty acid chain number of carbons can range anywhere from C₄ to about C₂₆, even from about C₄ to about C₁₆, or even from C₄ to C₁₄, or even C₆ to C₁₂. Preferably with di- or triglycerides at least one of the fatty acids is of C₄ to C₁₄. The fatty acids can be straight chain or branched, saturated or unsaturated. Trigycerides are preferred. Desirably the di- or triglycerides are miscible or soluble in the oil phase, and preferably liquids or at least melting below about 90°C. The fatty acids of the di- or triglycerides can be composed of similar fatty acids or even mixed fatty acids, straight chain or branched, saturated or unsaturated, or even polyunsaturated. Blends of the foregoing may be used.

More preferably, the diluent is an oil solution that comprises a vegetable oil preferably selected from canola oil, soybean oil, corn oil, rapeseed, sunflower oil, or cottonseed oil or even methyl esters of fatty acids derived from transesterification of canola oil, soybean oil, corn oil, rapeseed, cottonseed oil, sunflower oil, or even alkyl esters of oleic acid; or straight chain saturated parafinnic aliphatic hydrocarbons of from 10 to 13 carbons. Blends of any of the foregoing may also be used.

A solvent, can also optionally be used in addition, neat or blended, and can be selected from one or more of dialkyl phthalates in which the alkyl groups thereof have from 4 to 13 carbon atoms, e.g., dibutyl phthalate, dioctylphthalate, dinonyl phthalate and ditridecyl phthalate; 2,2,4-trimethyl-1,3-pentanediol diisobutyrate (U.S. Pat. No. 4,027,065); ethyldiphenylmethane (U.S. Pat. No. 3,996,405); alkyl biphenyls such as monoisopropylbiphenyl (U.S. Pat. No. 3,627,581); C₁₀ - C₁₄ alkyl benzenes such as dodecyl benzene; diaryl ethers, di(aralkyl)ethers and aryl aralkyl ethers, ethers such as diphenyl ether, dibenzyl ether and phenyl benzyl ether; liquid higher dialkyl ethers (having at least 8 carbon atoms); liquid higher alkyl ketones (having at least 9 carbon atoms); alkyl or aralkyl benzoates, e.g., benzyl benzoate; alkylated naphthalenes; partially hydrogenated terphenyls; vegetable oils such as soy, corn, rapeseed, canola, cotton seed, sunflower; alkyl esters of fatty acids; straight chain saturated paraffinic hydrocarbons.

### DETAILED DESCRIPTION

The present invention teaches improved microcapsule particles comprising an oil soluble or dispersible core material and a wall material at least partially surrounding the core material, the microcapsule wall material comprising the reaction product of a first composition in the presence of a second composition.

More particularly, the invention describes a population of microcapsule particles comprising an oil soluble or dispersible core material and a wall material at least partially surrounding the core material. The microcapsule wall material consists of the reaction product of a first composition in the presence of a second composition; the first composition comprises a water phase. The term "water phase initiator" means that the initiator is water soluble or water dispersible. The water phase comprises an aqueous solution with a water soluble or dispersible initiator having at least one -COOH or amine functional group and a water phase emulsifier, the emulsifier comprising a water soluble or dispersible material at a pH from 4 to 12. The water soluble or dispersible initiator is selected from initiators having a C-N=N-C type structure and amine or carboxyl functionality, the initiators selected from the group of initiators consisting of formulas I, II and III; 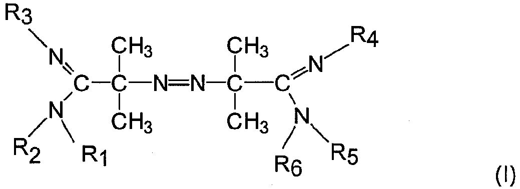 wherein R₂, R₃, R₄ and R₅ are each independently selected from hydrogen, alkylcarboxy, or, R₂ and R₃ together are from two to four carbons and form a cyclic structure, and R₄ and R₅ together are from two to four carbons and form a cyclic structure; wherein R₁ and R₆ are each hydrogen with the proviso that when R₃ and R₄ are hydrogen, R₁ and R₆ each are a four carbon cyclic ring structure or, 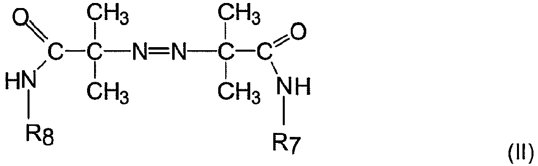 wherein each of R₇ and R₈ is each independently alkylhydroxy of from one to three hydroxyl moieties and the alkyl moiety being of from C₁ to C₇,
or, 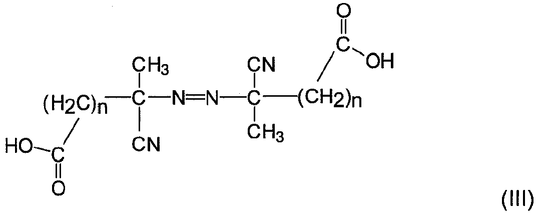 wherein n is an integer from 1 to 5.

The second composition comprises an oil phase. More particularly, the oil phase comprises: i) one or more multi functional acrylate or methacrylate monomers or oligomers and substantially free of amine acrylate or amine methacrylate, and an initiator soluble or dispersible in the oil phase; ii) from 0 to 10% by weight, of the oil phase, of a monofunctional acrylate or methacrylate monomer or oligomer; iii) an intended core material; and iv) a diluents selected from esters of glycerol and fatty acids wherein at least one of the fatty acids is C₁₂ or greater.

The ratio of the water phase initiator to multifunctional acrylate or methacrylate is from 0.1:99.9 to 20:80 by weight. The ratio of the diluent to the core material is from 0.1:99.9 to 90:10 on a weight basis. The reaction product of the first composition and second composition results in the formation of a population of microcapsules.

Initiator according to formula I include:
2,2'-azobis(2-methylpropionamidine)dihydrochloride
2,2'-azobis[2-(2-imidazolin-2-yl)propane]dihydrochloride
2,2'-azobis[2-(2-imidazolin-2-yl)propane]dihydrochloride
2,2'-azobis[2-(2-imidazolin-2-yl)propane]disulfate dihydrate
2,2'-azobis(2-methylpropionamidine)dihydrochloride
2,2'-azobis[N-(2-carboxyethyl)-2-methylpropionamidine]hydrate
2,2'-azobis{2-[1-(2-hydroxyethyl)-2-imidazolin-2-yl]propane}dihydrochloride
2,2'-azobis[2-(2-imidazolin-2-yl)propane]

Initiator according to formula II include:
2,2'-azobis{2-methyl-N-[1,1-bis(hydroxymethyl)-2-hydroxyethl]propionamide}
2,2'-azobis[2-methyl-N-[2-hydroxyethyl)propionamide].
2,2'-azobis{2-methyl-N-[1,1-bis(hydroxymethyl)-2-hydroxyethl]propionamide}
2,2'-azobis[2-methyl-N-(2-hydroxyethyl)propionamide]

Initiator according to formula III include:
4,4'-(1,2-diazenediyl)bis[4-cyanopentanoic acid]
7,7'-(1 ,2-diazenediyl)bis[7-cyanooctanionic acid]
3,3'-(1,2-diazenediyl)bis[3-cyanobutanoic acid]

The water phase emulsifier is preferably selected from polyalkylene glycol ether, condensation products of alkyl phenols, aliphatic alcohols, or fatty acids with alkylene oxide, ethoxylated alkyl phenols, ethoxylated arylphenols, ethoxylated polyaryl phenols, carboxylic esters solubilized with a polyol, polyvinyl alcohol, polyvinyl acetate, or copolymers of polyvinyl alcohol polyvinyl acetate, polyacrylamide, poly(*N*-isopropylacrylamide), poly(2-hydroxypropyl methacrylate), poly(2-ethyl-2-oxazoline), poly(2-isopropenyl-2-oxazoline-*co*-methyl methacrylate), poly(methyl vinyl ether), and polyvinyl alcohol-*co*-ethylene). Especially useful polyvinylalcohols include polyvinyl alcohols of molecular weight 13000 to 186000 daltons, preferably from 13000 to about 23000 daltons, or even from 146000 to 186000 daltons. The polyvinyl alcohol can be partially or fully hydrolyzed.

Polyvinyl alcohol partially hydrolyzed in the range of 85 to 95% hydrolyzed is preferred. Partially hydrolyzed polyvinylalcohol at 88% hydrolysis or less was useful, with about 88% hydrolysis being more preferred.

In the invention, the oil phase is surprisingly substantially free of amine acrylate or amine methacrylate.

Multifunctional acrylate or methacrylate monomers or oligomers can include mono-; di-; tri-; tetra- penta-; hexa-; hepta-; or octa-functional acrylate esters, methacrylate esters and multi-functional polyurethane acrylate esters and epoxy acrylates stable in the presence of initiator. Monomers shall be understood as including oligomers thereof. Optionally, an inhibitor such as hydroquinone can be added to the monomer and initiator blend to prevent premature polymerization.

Useful multifunctional monomers in the invention are one or more di- and poly-functional acrylate esters, difunctional (meth)acrylate esters, polyfunctional (meth)acrylate esters, difunctional urethane acrylate esters, polyfunctional urethane acrylate esters and polyfunctional and difunctional epoxy acrylate monomers and oligomers used alone or in combination as blends. In alternate embodiments, optionally, the di- and polyfunctional acrylates, methacrylates, urethane acrylates, and epoxy acrylates are further blended with monofunctional acrylates, methacrylates, urethane acrylates and epoxy acrylates.

In an aspect of the invention multi-functional acrylate or methacrylate monomers or oligomers preferably are selected to have a Tg > 60°C, in one aspect greater than 70°C, and in another aspect greater than 80°C, and can include by way of illustration and not limitation, allyl methacrylate; triethylene glycol dimethacrylate; ethylene glycol dimethacrylate, diethylene glycol dimethacrylate, aliphatic or aromatic urethane diacrylates, difunctional urethane acrylates, ethoxylated aliphatic difunctional urethane methacrylates, aliphatic or aromatic urethane dimethacrylates, epoxy acrylates, epoxymethacrylates; tetraethylene glycol dimethacrylate; polyethylene glycol dimethacrylate; 1,3 butylene glycol diacrylate; 1,4-butanediol dimethacrylate; 1,4-butaneidiol diacrylate; diethylene glycol diacrylate; 1,6 hexanediol diacrylate; 1,6 hexanediol dimethacrylate; neopentyl glycol diacrylate; polyethylene glycol diacrylate; tetraethylene glycol diacrylate; triethylene glycol diacrylate; 1,3 butylene glycol dimethacrylate; tripropylene glycol diacrylate; ethoxylated bisphenol diacrylate; ethoxylated bisphenol dimethylacrylate; dipropylene glycol diacrylate; alkoxylated hexanediol diacrylate; alkoxylated cyclohexane dimethanol diacrylate; propoxylated neopentyl glycol diacrylate, trimethylolpropane trimethacrylate; trimethylolpropane triacrylate, pentaerythritol triacrylate, ethoxylated trimethylolpropane triacrylate, propoxylated trimethylolpropane triacrylate, propoxylated glyceryl triacrylate, ditrimethylolpropane tetraacrylate, dipentaerythritol pentaacrylate, ethoxylated pentaerythritol tetraacrylate.

Crosslinking may be effected via groups capable of addition or condensation.

Excluding solvent, the multi-functional acrylate or methacrylate monomers are used in a relative ratio of from about 0.1:99.9 to about 10:90 preferably from about 0.5:99.5 to about 5:95, and most preferably 1:99 to about 3:97.

Monofunctional acrylates, i.e., those containing only one acrylate group, may also be included in the oil phase. Typical monoacrylates include 2-ethylhexyl (meth)acrylate, 2-hydroxyethyl (meth)acrylate, 2-hydroxypropyl (meth)acrylate, lauryl (meth)acrylate, cyclohexyl (meth)acrylate, tetrahydrofurfuryl (meth)acrylate, chlorobenzyl (meth)acrylate, and glycidyl (meth)acrylate. In some circumstances mixtures of mono or multi-functional (meth)acrylates or their derivatives as well as combinations of one or more (meth)acrylate monomers, oligomers and/or prepolymers or their derivatives with other copolymerizable monomers, may be useful as well. Preferably from 0 to 10% by weight of the oil phase is a monofunctional acrylate or methacrylate monomer or oligomer.

For example, in the process of making the capsules, assuming a system of about 800 grams with solvent, the largest constituents are typically solvent, 10 to 70 weight percent, preferably 25 to 55 weight percent oil phase solvent and oil; 10 to 70 weight percent, preferably 35 to 65 weight percent water; 0.01 to 1 weight percent, preferably 0.1 to 10 weight percent, usually 0.5 to 8 weight percent multi-functional acrylate or methacrylate monomer or oligomer; oil to 20 weight percent. Initiator is 10% or less, usually about 5% or less, preferably 2% by weight or less and more preferably 1% or less. The ratio by weight of the water phase initiator to multifunctional acrylate is from 0.1:99.9 parts to 20:80 by weight; preferably from 0.1:99.9 to about 10:90 parts by weight, or even from 0.2 to about 5:95 parts by weight.

The initiators are energy activated meaning generating free radicals when subjected to heat or other energy input. In the water phase the initiators are those of formulas I, II or III set forth herein, and blends thereof. Initiators are available commercially, such as Vazo initiators, which typically indicate a decomposition temperature for the initiator. Preferably the initiator is selected to have a decomposition point of about 50°C or higher.

The initiators for the oil phase can be selected from the group of initiators comprising an azo or peroxy initiator, such as peroxide, dialkyl peroxide, alkyl peroxide, peroxyester, peroxycarbonate, peroxyketone and peroxydicarbonate, 2, 2'-azobis (isobutylnitrile), 2,2'-azobis(2,4-dimethylpentanenitrile), 2,2'-azobis (2,4-dimethylvaleronitrile), 2,2'-azobis(2-methylpropanenitrile), 2,2'-azobis (methylbutyronitrile), 1,1'-azobis (cyclohexanecarbonitrile), 1,1'-azobis(cyanocyclohexane), benzoyl peroxide, decanoyl peroxide; lauroyl peroxide; benzoyl peroxide, di(n-propyl) peroxydicarbonate, di(sec-butyl) peroxydicarbonate, di(2-ethylhexyl) peroxydicarbonate, 1,1-dimethyl-3-hydroxybutyl peroxyneodecanoate, α-cumyl peroxyneoheptanoate, t-amyl peroxyneodecanoate, t-butyl peroxyneodecanoate, t-amyl peroxypivalate, t-butyl peroxypivalate, 2,5-dimethyl 2,5-di (2-ethylhexanoyl peroxy) hexane, t-amyl peroxy-2-ethyl-hexanoate, t-butyl peroxy-2-ethylhexanoate, t-butyl peroxyacetate, di-t-amyl peroxyacetate, t-butyl peroxide, di-t-amyl peroxide, 2,5-dimethyl-2,5-di-(t-butylperoxy)hexyne-3, cumene hydroperoxide, 1,1-di-(t-butylperoxy)-3,3,5-trimethyl-cyclohexane, 1,1-di-(t-butylperoxy)-cyclohexane, 1,1-di-(t-amylperoxy)-cyclohexane, ethyl-3,3-di-(t-butylperoxy)-butyrate, t-amyl perbenzoate, t-butyl perbenzoate, ethyl 3,3-di-(t-amylperoxy)-butyrate, and the like. Blends of initiators can also be employed. Initiators are available commercially, such as Vazo initiators, which typically indicate a decomposition temperature for the initiator. Preferably the initiator is selected to have a decomposition point of about 50°C or higher. Usefully multiple initiators can be employed. Preferably initiators are selected to stagger the decomposition temperatures at the various steps, pre-polymerization, wall formation and hardening or polymerizing of the capsule wall material. For example, a first initiator in the oil phase can decompose at 55°C, to promote prepolymer formation, a second can decompose at 60°C to further aid forming the wall material. Optionally a third initiator can decompose at 65°C to facilitate polymerization of the capsule wall material. The total amount of initiator can be typically as low as 0.1 weight percent or as high as 10 weight percent.

Usefully multiple initiators for the oil phase are also employed. Preferably initiators are selected to stagger the decomposition temperatures at the various steps, pre-polymerization, wall formation and hardening or polymerizing of the capsule wall material. For example, a first initiator in the oil phase can decompose at 55°C, to promote prepolymer formation, a second in the water or oil phase can decompose at 60°C to aid forming the wall material. Optionally a third initiator can decompose at 65°C to facilitate polymerization of the capsule wall material. The total amount of initiator can be typically as low as 0.1 weight percent or as high as 10 weight percent.

The diluent can be selected from one or more of various glycerides, monoacylglycerols, diglycerides, triglycerides, and alkyl esters of fatty acids derived from transesterification of vegetable oil(s). Triglycerides are esters of glycerol and three fatty acids. The fatty acids of the mono-, di- or tri-glycerides can be saturated or unsaturated. Each fatty acid chain number of carbons can range anywhere from C₄ to about C₂₆, even from about C₄ to about C₁₆, or even from C₄ to C₁₄, or even C₆ to C₁₂. Preferably with triglycerides at least one of the fatty acids is of C₄ to C₁₄. The fatty acids can be straight chain or branched, saturated or unsaturated. Desirably the triglycerides are miscible or soluble in the oil phase, and preferably liquids or at least melting below about 90°C. The fatty acids of the triglycerides can be composed of similar fatty acids or even mixed fatty acids, straight chain or branched, saturated or unsaturated, or even polyunsaturated.

More preferably, the diluents is an oil solution that comprises a vegetable oil preferably selected from canola oil, soybean oil, corn oil, rapeseed, sunflower oil, or cottonseed oil or even methyl esters of fatty acids derived from transesterification of canola oil, soybean oil, corn oil, rapeseed, cottonseed oil, sunflower oil, or even alkyl esters of oleic acid; or straight chain saturated parafinnic aliphatic hydrocarbons of from 10 to 13 carbons. Blends of any of the foregoing may also be used.

Optional solvents can be selected from various solvents and the solvent can include by way of illustration and not limitation, ethyldiphenylmethane, butyl biphenyl ethane, benzylxylene, alkyl biphenyls such as propylbiphenyl and butylbiphenyl, dialkyl phthalates e.g. dibutyl phthalate, dioctylphthalate, dinonyl phthalate and ditridecylphthalate; 2,2,4-trimethyl-1,3-pentanediol diisobutyrate, alkyl benzenes such as dodecyl benzene; alkyl or aralkyl benzoates such as benzyl benzoate; diaryl ethers, di(aralkyl)ethers and aryl aralkyl ethers, ethers such as diphenyl ether, dibenzyl ether and phenyl benzyl ether, liquid higher alkyl ketones (having at least 9 carbon atoms), alkyl or aralky benzoates, e.g., benzyl benzoate, alkylated naphthalenes such as dipropylnaphthalene, partially hydrogenated terphenyls; high-boiling straight or branched chain hydrocarbons, alkaryl hydrocarbons such as toluene, vegetable oils such as canola oil, soybean oil, corn oil, sunflower oil, or cottonseed oil, methyl esters of fatty acids derived from transesterification of canola oil, soybean oil, cottonseed oil, corn oil, sunflower oil, pine oil, lemon oil, olive oil, or methyl ester of oleic acid, vegetable oils, esters of vegetable oils, e.g. soybean methyl ester, straight chain saturated paraffinic aliphatic hydrocarbons of from 10 to 13 carbons. Mixtures of the above can also be employed. Common diluents such as straight chain hydrocarbons can also be blended in. The solvent is selected on the basis of hydrophobicity and ability to disperse or solvate the respective multifunctional acrylate or methacrylate monomer and the monofunctional acrylate or methacrylate monomer or oligomer. In typical microencapsulation, the internal phase oil typically serves along with the core material as the internal contents of the microcapsule.

The microencapsulation process in certain of the embodiments is believed to rely formation of a species that migrate to the oil/water interface.

The size of the capsules can be controlled by adjusting the speed of agitation. Smaller size dispersions are achieved through faster agitation resulting in smaller capsules.

Emulsifying agents or protective colloids can be conveniently employed to facilitate dispersion. Such materials for example include anionic, cationic or non-ionic surfactants previously described.

The microcapsules according to the invention can be used to microencapsulate various core materials which can be oil soluble fluid core materials or an oil dispersible solid particle dispersed in a fluid core material, such as chromogens and dyes, flavorants, perfumes, sweeteners, fragrances, oils, fats, pigments, cleaning oils, pharmaceuticals, pharmaceutical oils, perfume oils, mold inhibitors, antimicrobial agents, adhesives, phase change materials, scents, fertilizers, nutrients, and herbicides by way of illustration and without limitation. The core can be liquid or even solid. With cores that are solid at ambient temperatures, the wall material can usefully enwrap less than the entire core for certain applications where availability of, for example, an agglomerate core is desired on application. Such uses can include scent release, cleaning compositions, emollients, cosmetic delivery and the like. The fluid core material for example for dispersing a solid particle core material can be a diluents material, or solvent, or an internal phase oil.

Microencapsulation can facilitate processing by increasing particle size or by converting liquids into free flowing solids. The largest volume applications of microcapsules are in imaging systems such as carbonless papers.

The microcapsule wall can serve the purpose of extending shelf life, stabilize and protect the core material, mask strong flavors, or protect contents so that they are available to participate in reactions such as imaging or adhesive formation when the capsule wall is ruptured, sheared, fractured, broken or melted.

The intended core material can be a minor or major constituent of the material encapsulated by the microcapsules. If the core material can function as the oil solvent in the capsules, it is possible to make the core material the major or even total material encapsulated. Usually however, the core material is from 0.01 to 99 weight percent of the capsule internal contents, preferably 0.01 to about 65 by weight of the capsule internal contents, and more preferably from 0.1 to about 45% by weight of the capsule internal contents. With certain applications, the core can be effective even at just trace quantities.

The process and composition of the invention makes possible, for example, formation of a population of microcapsules according to claim 1 where charge of the outer surface of the microcapsule wall can be modified to a desired level and charge type by selecting the appropriate water-soluble initiator from formulas I, II, and III, and by selecting the appropriate level of the selected initiator. More particularly, The microcapsules according to the invention make possible designing the characteristics of the finished capsule, in terms of charge. The initiators of formulas I, II, and III employed to manufacture the microcapsules of the invention make possible adding desired functional groups bonded to the wall material. Adding such functional groups by chemically bonding to the wall material, can alter the surface charges in a controlled fashion. Functional groups such as acid or amine functional groups can be bonded, such as via covalent bonds, to the forming wall material of the microcapsules. This makes possible customization of the microcapsule wall to design desired characteristics into the wall material of the microcapsule based on the extent and type of functional groups covalently bonded to the wall material. This makes it possible to design for example the charge characteristics of the microcapsules. In that the functional groups added via the initiator need not be merely adhered, but preferably are chemically bonded to the capsule wall, the imparted characteristic has a higher degree of permanence, and is not readily washed away or removed. Additionally, characteristics such as adherence of the finished microcapsules to particular substrates can be customized, and increased or decreased depending on the intended end use application. The charge characteristics of the finished microcapsules can be usefully customized.

In the process of the invention a first composition is prepared as an oil phase #1. The temperature of this oil phase is brought to a wall pre-reaction temperature. A nitrogen blanket is preferably employed and the solution mixed with high shear agitation to disperse the droplets. Gradually the temperature is increased to create a first composition reaction product.

A second oil phase is prepared and may be held at a pre-reaction temperature of the initiator.

The two oil solutions are allowed to pre-react and are combined. The mixtures are stirred and held at the pre-reaction temperature for sufficient time to pre-react the wall material. After the pre-reaction step, the water phase is added to the oil solutions.

The solutions are milled and heated for a time to allow wall deposition to proceed. The process is further illustrated and explained in the examples.

Microcapsule particles according to the invention, by selection of curing conditions, wall materials, initiators, and concentration can select for a desired permeance level allowing formation of capsules with more targeted release profiles appropriate to the end use application. The process of the invention enables manufacture of capsules with different permeability levels. Permeability is conveniently expressed as release of less than a certain quantity of core material over a given time frame. For example, low permeability would be release of less than 1.0 mg/ml at 48 hours extraction time, or less than 2 mg/ml at 1 week extraction time or less than 5 mg/ml at four weeks extraction time. The desired end use application often will dictate the target release rate deemed acceptable to meet the needs of the application.

The examples herein are considered to illustrate the invention and should not be considered as limiting. In the specification and in all the examples all parts or proportions are by weight and all measurements are in the metric system, unless otherwise indicated.

The abbreviations correspond to the following materials:

| | Company/City | |
|---|---|---|
| CN975 | Sartomer Company, Exton, PA | hexafunctional aromatic urethane acrylate oligomer |
| Colloid 351 | Rhone-Poulenc, Cedex, France | copolymer of 92% polyacrylic acid/8% butyl acrylate |
| SR206 | Sartomer, | diethylene glycol dimethacrylate |
| Vazo-52 | DuPont, Wilmington, DE | 2,2'-azobis (2,4-dimethylvaleronitrile) |
| Vazo-67 | DuPont, Wilmington, DE | 2,2'-azobis (2-methylbutyronitrile) |
| Vazo-68WSP | DuPont, Wilmington, DE | 4,4'-azobis (4-cyanovaleric acid) |
| Captex 355 | Abitec, Columbus OH | glycerol caprylate caprol |
| Celvol 540 PVA | Celanese, Dallas, TX | polyvinyl alcohol |

### Example 1

### Oil 1:

37.5g ethyl heptanoate
9g CN975

### Oil 2:

75g ethyl heptanoate
75g Captex 355
1.0g Vazo-67

### Water Phase:

105g 5% Celvol 540 PVOH
245g water
1.2g 4,4'-azobis (4-cyanovaleric acid)
1.2g 20% NaOH

Oil 2 is placed in a steel jacketed reactor at 35°C with mixing at 1000 rpm (4-tip flat mill blade) and with an nitrogen blanket at 100cc/min. The reactor was heated from 35°C to 70°C in 45 minutes and held at 70°C for 45 minutes. The reactor was then cooled from 70°C to 50°C in 75 minutes. Oil 1 added and the combined oils held at 50°C for 10 minutes. Mixing was stopped and the water phase added and mixing started at 2200 rpm and continued for 60 minutes, creating a stable emulsion. Mixing was stopped and the mill blade replaced with a Z-bar and mixed at 400 rpm for the duration of the batch. The batch was heated from 50°C to 75°C in 30 minutes, held at 75°C for 4 hours, heated from 75°C to 95°C in 30 minutes and held at 95°C for 8 hours. The nitrogen blanket was applied throughout. The resulting batch yielded low leakage capsules with a volume-weighted median particle size of about 15 microns.

### Example 2: It is expected that microcapsules can also be prepared according to the process of Example 1 (above) but with the following formulation:

### Oil 1:

37.5g Ethyl Heptanoate
9g CN975

### Oil 2:

37.5g Ethyl Heptanoate
112.5g Soybean Oil
0.5g Vazo-52

### Water Phase:

56g 5% 540 Celvol PVOH
300g water
1.2g 4,4'-azobis (4-cyanovaleric acid)
1.2g 20% NaOH

### Example 3: Prepare microcapsules according to the process of Example 1 (above) but with the following formulation:

### Oil 1:

37.5g Ethyl Heptanoate
9g SR206

### Oil 2:

112.5g Ethyl Heptanoate
37.5g Soybean Oil
1.0g Vazo-67

### Water Phase:

105g 5% 540 Celvol PVOH
245g water
1.0g 2,2'-azobis(2-methylpropionamidine)dihydrochloride

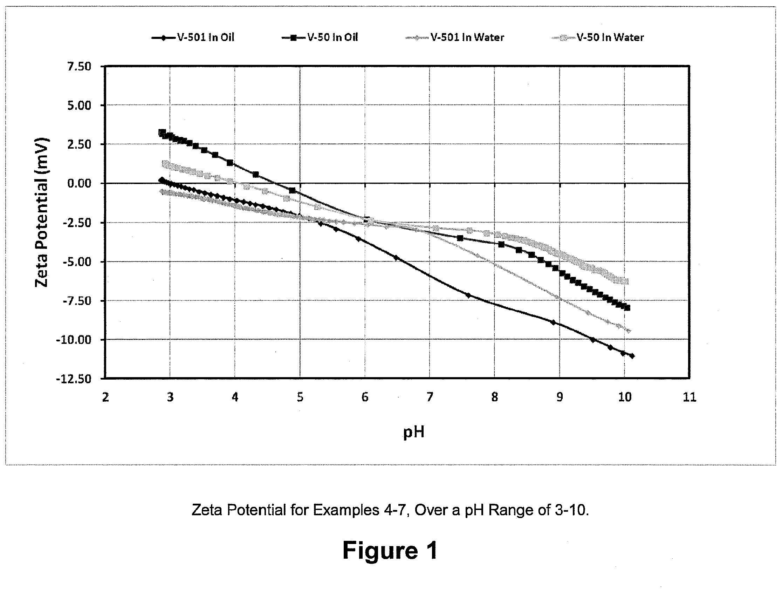

Examples 4 to 7. Using the procedure described in Example 1, the following Examples 4 to 7 were preferred. The zeta potential of microcapsules according to Examples 4 to 7 is graphed in Figure 1.

### Example 4 (TAS0516131, V-501 in Oil):

### Oil 1:

37.5g Ethyl Heptanoate
9g CN975

### Oil 2:

75.0g Ethyl Heptanoate
75.0g Soybean Oil
1.0g Vazo-67
1.0g V-501

### Water Phase:

35g 5% 540 Celvol PVOH
315g water

Capsules produced using this formula exhibited low leakage (0.15%) as measured by free-oil determination.

### Example 5 (TAS0507131, V-501 in Water):

### Oil 1:

37.5g Ethyl Heptanoate
9g CN975

### Oil 2:

75.0g Ethyl Heptanoate
75.0g Soybean Oil
1.0g Vazo-67

### Water Phase:

35g 5% 540 Celvol PVOH
315g water
3g V-501
3g 20% NaOH

Capsules produced using this formula exhibited low leakage (0.19%) as measured by free-oil determination.

### Example 6 (TAS0516132, V-50 in Oil):

### Oil 1:

37.5g Ethyl Heptanoate
9g CN975

### Oil 2:

75.0g Ethyl Heptanoate
75.0g Soybean Oil
1.0g Vazo-67
1.0g V-50

### Water Phase:

35g 5% 540 Celvol PVOH
315g water

Capsules produced using this formula exhibited low leakage (0.10%) as measured by free-oil determination.

### Example 7 (TAS0509132, V-50 in Water):

### Oil 1:

37.5g Ethyl Heptanoate
9g CN975

### Oil 2:

75.0g Ethyl Heptanoate
75.0g Soybean Oil
1.0g Vazo-67

### Water Phase:

35g 5% 540 Celvol PVOH
315g water
3g V-50

Capsules produced using this formula exhibited low leakage (0.06%) as measured by free-oil determination.

Figure 1 shows the Zeta potential, measured over the pH range of 3 to 10, for Examples 4-7. The results demonstrate the capsule surface charge profile can be manipulated via the type of charged initiator and the location of the initiator within the encapsulation process.

It is thus seen that microcapsules may be prepared in accordance with the foregoing teachings.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Uses of singular terms such as "a," "an," are intended to cover both the singular and the plural, unless otherwise indicated herein or clearly contradicted by context. The terms "comprising," "having," "including," and "containing" are to be construed as open-ended terms. Any description of certain embodiments as "preferred" embodiments, and other recitation of embodiments, features, or ranges as being preferred, or suggestion that such are preferred, is not deemed to be limiting. The invention is deemed to encompass embodiments that are presently deemed to be less preferred and that may be described herein as such. All methods described herein can be performed in any suitable order unless otherwise indicated herein or otherwise clearly contradicted by context. The use of any and all examples, or exemplary language (e.g., "such as") provided herein, is intended to illuminate the invention and does not pose a limitation on the scope of the invention. Any statement herein as to the nature or benefits of the invention or of the preferred embodiments is not intended to be limiting. This invention includes all modifications and equivalents of the subject matter recited herein as permitted by applicable law. Moreover, any combination of the above-described elements in all possible variations thereof is encompassed by the invention unless otherwise indicated herein or otherwise clearly contradicted by context. The description herein of any reference or patent, even if identified as "prior," is not intended to constitute a concession that such reference or patent is available as prior art against the present invention. No unclaimed language should be deemed to limit the invention in scope. Any statements or suggestions herein that certain features constitute a component of the claimed invention are not intended to be limiting unless reflected in the appended claims.

## Claims

1. A population of microcapsule particles comprising:
an oil soluble or dispersible core material; and
a wall material at least partially surrounding the core material,
the microcapsule wall material consisting of the reaction product of a first composition in the presence of a second composition;
the first composition comprising a water phase:
the water phase comprising a water soluble or dispersible initiator having at least one -COOH or amine functional group and an water phase emulsifier, the emulsifier comprising a water soluble or dispersible material at a pH from 4 to 12,
the water soluble or dispersible initiator is selected from initiators having a C-N=N-C type structure and amine or carboxyl functionality, the initiators selected from the group of initiators consisting of formulas I, II and III; 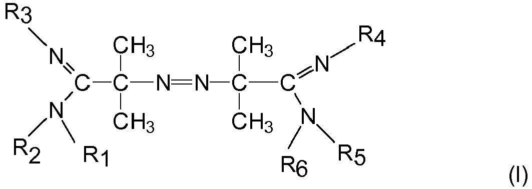 wherein R₂, R₃, R₄ and R₅ are each independently selected from hydrogen, alkylcarboxy, or, R₂ and R₃ together are from two to four carbons and form a cyclic structure, and R₄ and R₅ together are from two to four carbons and form a cyclic structure; wherein R₁ and R₆ are each hydrogen with the proviso that when R₃ and R₄ are hydrogen, R₁ and R₆ are a four carbon cyclic ring structure
or, 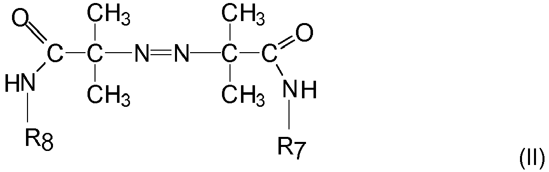 wherein each of R₇ and R₈ is each independently alkylhydroxy of from one to three hydroxyl moieties and the alkyl moiety being of from C₁ to C₇,
or, 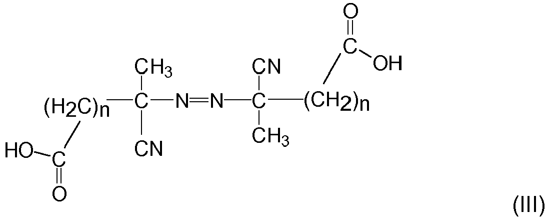 wherein n is an integer from 1 to 5
the second composition comprising an oil phase:
the oil phase comprising:
i) an initiator dispersible or soluble in the oil phase,
ii) one or more multi functional acrylate or methacrylate monomers or oligomers, said multifunctional monomer or oligomer being substantially free of amine acrylate or amine methacrylate,
iii) from 0 to 10% by weight, of the oil phase, of a monofunctional acrylate or methacrylate monomer or oligomer
iv) an intended core material and
v) a diluent selected from esters of glycerol and fatty acids wherein at least one of the fatty acids is C₁₂ or greater,
wherein the ratio of the water phase initiator to multifunctional acrylate or methacrylate is from 0.1:99.9 to 20:80 by weight
wherein the ratio of the diluent to the core material is from 0.1:99.9 to 90:10 on a weight basis
whereby the reaction product of the first composition and second composition results in the formation of a population of microcapsules.

2. The population of microcapsules according to claim 1 wherein a charge is imparted, to a selected level and charge type, to the microcapsule wall modified by addition of acid or amine functional groups by one or more of the water-soluble initiators of formulas I, II, or III.

3. The population of microcapsule particles according to claim 1 wherein the water phase initiator is selected from the group of initiators according to formula I.

4. The population of microcapsules according to claim 3 wherein the water phase initiator is selected from the group consisting of:
2,2'-azobis(2-methylpropionamidine)dihydrochloride,
2,2'-azobis[2-(2-imidazolin-2-yl)propane]dihydrochloride,
2,2'-azobis[2-(2-imidazolin-2-yl)propane]dihydrochloride,
2,2'-azobis[2-(2-imidazolin-2-yl)propane]disulfate dehydrate,
2,2'-azobis(2-methylpropionamidine)dihydrochloride,
2,2'-azobis[N-(2-carboxyethyl)-2-methylpropionamidine]hydrate,
2,2'-azobis{2-[1-(2-hydroxyethyl)-2-imidazolin-2-yl]propane}dihydrochloride, and
2,2'-azobis[2-(2-imidazolin-2-yl)propane].

5. The population of microcapsule particles according to claim 1 wherein the water phase initiator is selected from the group of initiators according to formula II.

6. The population of microcapsules according to claim 5 wherein the water phase initiators is selected from the group consisting of:
2,2'-azobis{2-methyl-N-[1,1-bis(hydroxymethyl)-2-hydroxyethl]propionamide},
2,2'-azobis[2-methyl-N-[2-hydroxyethyl)propionamide],
2,2'-azobis{2-methyl-N-[1,1-bis(hydroxymethyl)-2-hydroxyethl]propionamide, and
2,2'-azobis[2-methyl-N-(2-hydroxyethyl)propionamide.

7. The population of microcapsule particles according to claim 1 wherein the water phase initiator is selected from the group of initiators according to formula III.

8. The population of microcapsules according to claim 7 wherein the water phase initiators is selected from the group consisting of:
4,4'-(1,2-diazenediyl)bis[4-cyanopentanoic acid],
7,7'-(1,2-diazenediyl)bis[7-cyanooctanionic acid], and
3,3'-(1,2-diazenediyl)bis[3-cyanobutanoic acid]

9. The population of microcapsules according to claim 1 wherein the multifunctional acrylate or methacylate monomers and oligomers have at least two vinyl groups.

10. The population of microcapsules according to claim 9 wherein the multifunctional acrylate or methacrylate monomers and oligomers are comprised of at least two multifunctional acrylate monomers and oligomers.

11. The population of microcapsules according to claim 1 wherein the water phase emulsifier comprises a water soluble or dispersible material at a pH of from 8-10.

12. The population of microcapsules according to claim 1 wherein the water phase emulsifier has a molecular weight greater than 100 and is selected from polymers with hydroxyl, ether, ester, or ketone functionality.

13. A process for forming a population of microcapsules comprising a fluid core material and a wall material at least partially surrounding the core material, the microcapsule population being formed by:
providing an oil soluble fluid core material or oil-dispersible solid particle dispersed in a fluid core material;
providing an oil internal phase comprising a diluent selected from esters of glycerol and fatty acids wherein at least one of the fatty acids is C₁₂ or greater,
dividing the oil internal phase into oil 1 and oil 2;
dispersing into oil 1 an initiator;
dispersing into oil 2 a multifunctional acrylate or methacrylate monomer or oligomer, substantially free of amine acrylate or amine methacrylate, and dispersing into oil 2 the oil soluble fluid core material or oil-dispersible solid particle dispersed in a fluid core material;
heating sufficiently to activate the initiator of oil 1
combining oil 1 and oil 2 forming a combined oil continuous internal phase and allowing reaction to proceed for a time sufficient to pre-polymerize the multifunctional monomers or oligomers from oil 2;
providing a water phase comprising a water phase emulsifier, the emulsifier comprising a water soluble or dispersible material at a pH from 4 to 12, and a water soluble or dispersible initiator of formulas I, II or III; 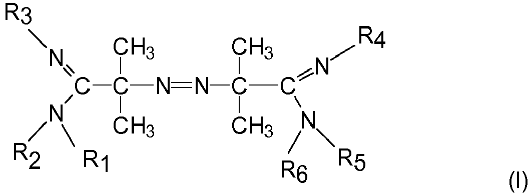 wherein R₂, R₃, R₄ and R₅ are each independently selected from hydrogen, alkylcarboxy, or, R₂ and R₃ together are from two to four carbons and form a cyclic structure, and R₄ and R₅ together are from two to four carbons and form a cyclic structure; wherein R₁ and R₆ are each hydrogen with the proviso that when R₃ and R₄ are hydrogen, R₁ and R₆ are a four carbon cyclic ring structure
or, 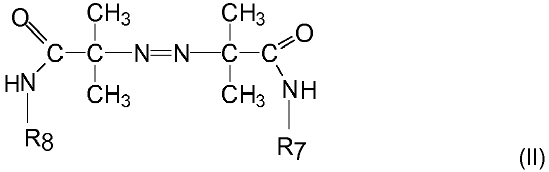 wherein each of R₇ and R₈ is each independently alkylhydroxy of from one to three hydroxyl moieties and the alkyl moiety being of from C₁ to C₇,
or, 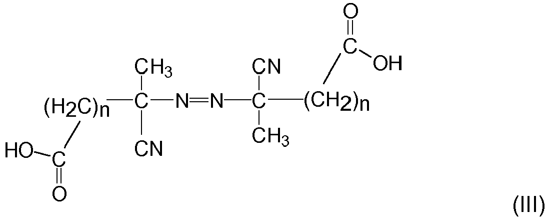 wherein n is an integer from 1 to 5,
heating sufficiently to activate the initiator of the water phase
forming a mixture by dispersing the combined oil internal phase into the water phase;
emulsifying the mixture by subjecting the mixture to high shear agitation;
heating the mixture for a time and temperature sufficient whereby the multifunctional acrylate or methacrylate is further polymerized and migrates to the interface of the oil and water phases thereby surrounding the core material in the oil phase and forming wall material; continuing
heating to generate additional free radicals of initiators of formulas I, II, or III in the water phase, thereby crosslinking the wall material surrounding the core material,
wherein the ratio of the water phase initiator to multifunctional acrylate or
methacrylate is from 0.1:99.9 to 20:80 by weight,
wherein the ratio of the diluent to the core material is from 0.1:99.9 to 90:10 on a weight basis.

14. The process for forming a population of microcapsules according to claim 13 wherein a charge is imparted, to a selected level and charge type, to the microcapsule wall modified by addition of acid or amine functional groups by one or more of the water-soluble initiators of formulas I, II, or III.

## Patentansprüche

1. Population von Mikrokapselpartikeln, umfassend:
ein öllösliches oder dispergierbares Kernmaterial und
ein wenigstens teilweise das Kernmaterial umgebendes Wandmaterial,
wobei das Mikrokapselwandmaterial aus dem Reaktionsprodukt einer ersten Zusammensetzung bei Vorliegen einer zweiten Zusammensetzung besteht,
wobei die erste Zusammensetzung eine Wasserphase umfasst:
wobei die Wasserphase einen wasserlöslichen oder dispergierbaren Initiator umfasst, der wenigstens eine -COOH- oder funktionelle Amingruppe und einen Wasserphasen-Emulgator aufweist, wobei der Emulgator ein wasserlösliches oder dispergierbares Material mit einem pH-Wert von 4 bis 12 aufweist,
wobei der wasserlösliche oder dispergierbare Initiator ausgewählt ist aus Initiatoren mit einer C-N=N-C-Typstruktur und Amin- oder Carboxylfunktionalität und die Initiatoren aus der Gruppe von Initiatoren ausgewählt sind, die aus den Formeln I, II und III bestehen; 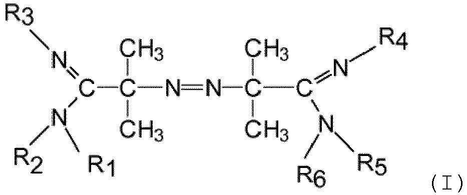 wobei R₂, R₃, R₄ und R₅ jeweils unabhängig aus Wasserstoff, Alkylcarboxy ausgewählt sind, oder R₂ und R₃ zusammen aus zwei bis vier Kohlenstoffen bestehen und eine zyklische Struktur bilden und R₄ und R₅ zusammen aus zwei bis vier Kohlenstoffen bestehen und eine zyklische Struktur bilden, wobei es sich bei R₁ und R₆ jeweils um Wasserstoff handelt, unter der Voraussetzung, dass dann, wenn es sich bei R₃ und R₄ um Wasserstoff handelt, R₁ und R₆ eine zyklische Ringstruktur von vier Kohlenstoffen sind
oder 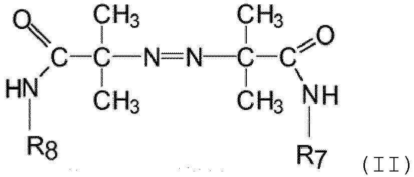 wobei es sich bei R₇ und R₈ jeweils unabhängig um Alkylhydroxy aus von einer bis drei Hydroxyleinheiten handelt und es sich bei der Alkyleinheit um von C₁ bis C₇ handelt,
oder 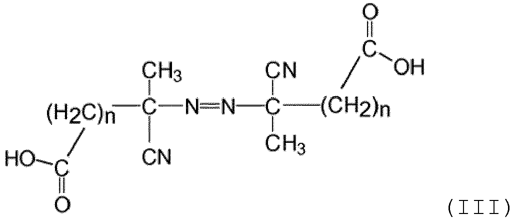 wobei es sich bei n um eine ganze Zahl von 1 bis 5 handelt;
wobei die zweite Zusammensetzung eine Ölphase umfasst:
wobei die Ölphase Folgendes umfasst:
i) einen in der Ölphase dispergierbaren oder löslichen Initiator,
ii) ein oder mehrere multifunktionale Acrylat- oder Methacrylatmonomere oder -oligomere, wobei diese multifunktionalen Monomere oder Oligomere im Wesentlichen frei von Aminacrylat oder Aminmethacrylat sind,
iii) von 0 bis 10 Gew-% eines monofunktionalen Acrylat- oder Methacrylatmonomers oder -oligomers der Ölphase
iv) ein vorgesehenes Kernmaterial und
v) ein Verdünnungsmittel, ausgewählt aus Estern von Glycerin und Fettsäuren, wobei wenigstens eine der Fettsäuren C₁₂ oder größer ist,
wobei das Verhältnis des Wasserphasen-Initiators zu dem multifunktionalen Acrylat oder Methacrylat auf das Gewicht bezogen von 0,1:99,9 bis 20:80 beträgt,
wobei das Verhältnis des Verdünnungsmittels zu dem Kernmaterial auf das Gewicht bezogen von 0,1:99,9 bis 90:10 beträgt,
wobei das Reaktionsprodukt der ersten Zusammensetzung und der zweiten Zusammensetzung zu der Bildung einer Population von Mikrokapseln führt.

2. Population von Mikrokapseln gemäß Anspruch 1, wobei eine Ladung zu einem ausgewählten Grad und Ladungstyp auf die Mikrokapselwand übertragen wird, die durch die Zugabe von Säure oder funktionellen Amingruppen durch einen oder mehrere der wasserlöslichen Initiatoren der Formeln I, II oder III modifiziert wird.

3. Population von Mikrokapselpartikeln gemäß Anspruch 1, wobei der Wasserphasen-Initiator ausgewählt ist aus der Gruppe von Initiatoren gemäß Formel I.

4. Population von Mikrokapseln gemäß Anspruch 3, wobei der Wasserphasen-Initiator ausgewählt ist aus der Gruppe bestehend aus:
2,2'-Azobis(2-methylpropionamidin)dihydrochlorid,
2,2'-Azobis[2-(2-imidazolin-2-yl)propan]dihydrochlorid,
2,2'-Azobis[2-(2-imidazolin-2-yl)propan]dihydrochlorid,
2,2'-Azobis[2-(2-imidazolin-2-yl)propan]disulfatdehydrat,
2,2'-Azobis(2-methylpropionamidin)dihydrochlorid,
2,2'-Azobis[N-(2-carboxyethyl)-2-methylpropionamidin]hydrat,
2,2'-Azobis{2-[1-(2-hydroxyethyl)-2-imidazolin-2-yl]propan}dihydrochlorid und
2,2'-Azobis[2-(2-imidazolin-2-yl)propan].

5. Population von Mikrokapselpartikeln gemäß Anspruch 1, wobei der Wasserphasen-Initiator ausgewählt ist aus der Gruppe von Initiatoren gemäß Formel II.

6. Population von Mikrokapseln gemäß Anspruch 5, wobei der Wasserphasen-Initiator ausgewählt ist aus der Gruppe bestehend aus:
2,2'-Azobis{2-methyl-N-[1,1-bis(hydroxymethyl)-2-hydroxyethyl]propionamid},
2,2'-Azobis[2-methyl-N-[2-hydroxyethyl)propionamid],
2,2'-Azobis{2-methyl-N-[1,1-bis(hydroxymethyl)-2-hydroxyethyl]propionamid und
2,2'-Azobis[2-methyl-N-(2-hydroxyethyl)propionamid.

7. Population von Mikrokapselpartikeln gemäß Anspruch 1, wobei der Wasserphasen-Initiator ausgewählt ist aus der Gruppe von Initiatoren gemäß Formel III.

8. Population von Mikrokapseln gemäß Anspruch 7, wobei der Wasserphasen-Initiator ausgewählt ist aus der Gruppe bestehend aus:
4,4'-(1,2-Diazendiyl)bis[4-cyanopentansäure],
7,7'-(1,2-Diazendiyl)bis[7-cyanooctansäure] und
3,3'-(1,2-Diazendiyl)bis[3-cyanobutansäure]

9. Population von Mikrokapseln gemäß Anspruch 1, wobei die multifunktionalen Acrylat- oder Methacrylatmonomere und -oligomere wenigstens zwei Vinylgruppen aufweisen.

10. Population von Mikrokapseln gemäß Anspruch 9, wobei die multifunktionalen Acrylat- oder Methacrylatmonomere und -oligomere aus wenigstens zwei multifunktionalen Acrylatmonomeren und -oligomeren bestehen.

11. Population von Mikrokapseln gemäß Anspruch 1, wobei der Wasserphasen-Emulgator ein wasserlösliches oder dispergierbares Material mit einem pH-Wert von 8-10 umfasst.

12. Population von Mikrokapseln gemäß Anspruch 1, wobei der Wasserphasen-Emulgator ein Molekulargewicht von mehr als 100 aufweist und aus Polymeren mit Hydroxyl-, Ether-, Ester- oder Keton-Funktionalität ausgewählt ist.

13. Prozess zur Bildung einer Population von Mikrokapseln, die ein Fluidkernmaterial und ein wenigstens teilweise das Kernmaterial umgebendes Wandmaterial umfassen, wobei die Mikrokapselpopulation gebildet wird durch:
Bereitstellen eines öllöslichen Fluidkernmaterials oder eines öldispergierbaren, in einem Fluidkernmaterial dispergierten festen Partikels;
Bereitstellen einer internen Ölphase, die ein Verdünnungsmittel umfasst, ausgewählt aus Estern von Glycerin und Fettsäuren, wobei wenigstens eine der Fettsäuren C₁₂ oder größer ist, und Teilen der internen Ölphase in Öl 1 und Öl 2;
Dispergieren eines Initiators in Öl 1;
Dispergieren eines multifunktionalen Acrylat- oder Methacrylatmonomers oder -oligomers in Öl 2, im Wesentlichen frei von Aminacrylat oder Aminmethacrylat, und Dispergieren des öllöslichen Fluidkernmaterials oder des öldispergierbaren, in einem Fluidkernmaterial dispergierten festen Partikels in Öl 2;
ausreichendes Erhitzen, um den Initiator von Öl 1 zu aktivieren,
Kombinieren von Öl 1 und Öl 2 zur Bildung einer kombinierten kontinuierlichen internen Phase und Fortfahrenlassen der Reaktion für eine zur Präpolymerisation der multifunktionalen Monomere oder Oligomere aus Öl 2 ausreichende Zeit;
Bereitstellen einer Wasserphase, umfassend einen Wasserphasen-Emulgator, wobei der Emulgator ein wasserlösliches oder dispergierbares Material mit einem pH-Wert von 4 bis 12 und einen wasserlöslichen oder dispergierbaren Initiator der Formeln I, II oder III umfasst; 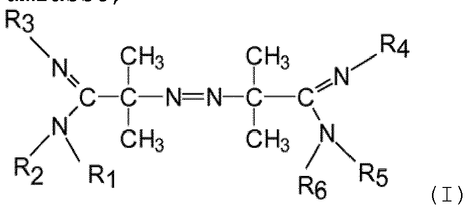 wobei R₂, R₃, R₄ und R₅ jeweils unabhängig aus Wasserstoff, Alkylcarboxy ausgewählt sind, oder R₂ und R₃ zusammen aus zwei bis vier Kohlenstoffen bestehen und eine zyklische Struktur bilden und R₄ und R₅ zusammen aus zwei bis vier Kohlenstoffen bestehen und eine zyklische Struktur bilden, wobei es sich bei R₁ und R₆ jeweils um Wasserstoff handelt, unter der Voraussetzung, dass dann, wenn es sich bei R₃ und R₄ um Wasserstoff handelt, R₁ und R₆ eine zyklische Ringstruktur von vier Kohlenstoffen sind
oder 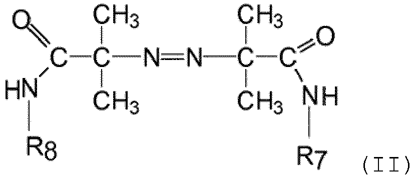 wobei es sich bei R₇ und R₈ jeweils unabhängig um Alkylhydroxy aus von einer bis drei Hydroxyleinheiten handelt und es sich bei der Alkyleinheit um von C₁ bis C₇ handelt,
oder 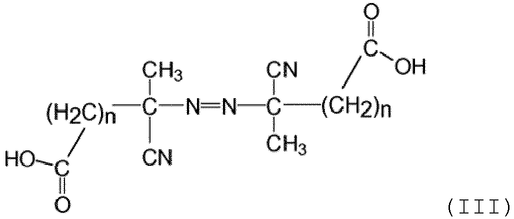 wobei es sich bei n um eine ganze Zahl von 1 bis 5 handelt,
Ausreichendes Erhitzen, um den Initiator der Wasserphase zu aktivieren,
Bilden eines Gemischs durch Dispergieren der kombinierten internen Ölphase in die Wasserphase;
Emulgieren des Gemischs, indem das Gemisch einer hohen Scherbewegung unterzogen wird;
Erhitzen des Gemischs über eine hinreichende Zeit und auf eine hinreichende Temperatur, wodurch das multifunktionale Acrylat oder Methacrylat weiter polymerisiert wird und zu der Grenzfläche der Öl- und der Wasserphase wandert und dadurch das Kernmaterial in der Ölphase umgibt und Wandmaterial bildet; weiteres
Erhitzen zur Erzeugung zusätzlicher freier Radikale der Initiatoren der Formeln I, II oder III in der Wasserphase, um dadurch das das Kernmaterial umgebende Wandmaterial zu vernetzen, wobei das Verhältnis des Wasserphasen-Initiators zu dem multifunktionalen Acrylat oder Methacrylat auf das Gewicht bezogen von 0,1:99,9 bis 20:80 beträgt,
wobei das Verhältnis des Verdünnungsmittels zu dem Kernmaterial auf das Gewicht bezogen von 0,1:99,9 bis 90:10 beträgt.

14. Verfahren zum Bilden einer Population von Mikrokapseln gemäß Anspruch 13, wobei eine Ladung zu einem ausgewählten Grad und Ladungstyp auf die Mikrokapselwand übertragen wird, die durch die Zugabe von Säure oder funktionellen Amingruppen durch einen oder mehrere der wasserlöslichen Initiatoren der Formeln I, II oder III modifiziert wird.

## Revendications

1. Population de particules de microcapsules comprenant :
un matériau de noyau soluble ou dispersible dans l'huile ; et
un matériau de paroi entourant au moins partiellement le matériau de noyau,
le matériau de paroi de microcapsule étant constitué du produit de réaction d'une première composition en présence d'une deuxième composition ;
la première composition comprenant une phase aqueuse :
la phase aqueuse comprenant un initiateur soluble ou dispersible dans l'eau ayant au moins un groupe fonctionnel -COOH ou amine et un émulsifiant de phase aqueuse, l'émulsifiant comprenant un matériau soluble ou dispersible dans l'eau à un pH de 4 à 12,
l'initiateur soluble ou dispersible dans l'eau étant choisi parmi des initiateurs ayant une structure de type C-N=N-C et une fonctionnalité amine ou carboxyle, les initiateurs étant choisis dans le groupe d'initiateurs constitué des formules I, II et III ; 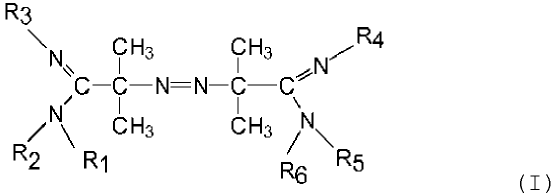 dans laquelle R₂, R₃, R₄ et R₅ sont chacun indépendamment choisis parmi hydrogène, alkylcarboxy, ou, R₂ et R₃ sont conjointement de deux à quatre carbones et forment une structure cyclique, et R₄ et R₅ sont conjointement de deux à quatre carbones et forment une structure cyclique ; dans laquelle R₁ et R₆ sont chacun hydrogène à condition que lorsque R₃ et R₄ sont hydrogène, R₁ et R₆ soient une structure d'anneau cyclique de quatre carbones, 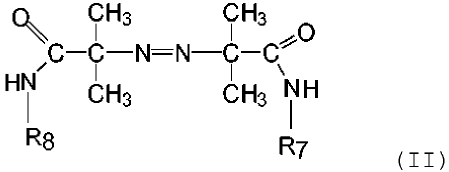 dans laquelle chacun de R₇ et R₈ est chacun indépendamment alkylhydroxy d'un à trois fragments hydroxyle et le fragment alkyle étant de C₁ à C₇, ou, 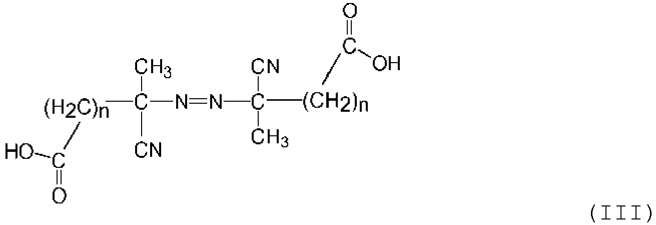 dans laquelle n est un entier de 1 à 5
la deuxième composition comprenant une phase huileuse :
la phase huileuse comprenant :
i) un initiateur dispersible ou soluble dans la phase huileuse,
ii) un ou plusieurs monomères ou oligomères d'acrylate ou méthacrylate multifonctionnels, ledit monomère ou oligomère multifonctionnel étant sensiblement exempt d'acrylate d'amine ou de méthacrylate d'amine,
iii) de 0 à 10 % en poids, de la phase huileuse, d'un monomère ou oligomère d'acrylate ou méthacrylate monofonctionnel
iv) un matériau de noyau choisi et
v) un diluant choisi parmi des esters de glycérol et des acides gras, où au moins un des acides gras est en C₁₂ ou plus,
où le rapport de l'initiateur en phase aqueuse à l'acrylate ou méthacrylate multifonctionnel est de 0,1:99,9 à 20:80 en poids,
où le rapport du diluant au matériau de noyau est de 0,1:99,9 à 90:10 sur une base en poids
de sorte que le produit de réaction de la première composition et la deuxième composition conduise à la formation d'une population de microcapsules.

2. Population de microcapsules selon la revendication 1 dans laquelle une charge est conférée, à un niveau et d'un type de charge sélectionnés, à la paroi de microcapsule modifiée par addition de groupes fonctionnels acides ou amines par un ou plusieurs des initiateurs solubles dans l'eau des formules I, II ou III.

3. Population de particules de microcapsules selon la revendication 1 dans laquelle l'initiateur en phase aqueuse est choisi dans le groupe d'initiateurs selon la formule I.

4. Population de microcapsules selon la revendication 3 dans laquelle l'initiateur en phase aqueuse est choisi dans le groupe constitué de :
dichlorhydrate de 2,2'-azobis(2-méthylpropionamidine),
dichlorhydrate de 2,2'-azobis[2-(2-imidazolin-2-yl)propane],
dichlorhydrate de 2,2'-azobis[2-(2-imidazolin-2-yl)propane],
disulfate de 2,2'-azobis[2-(2-imidazolin-2-yl)propane] dihydraté,
dichlorhydrate de 2,2'-azobis(2-méthylpropionamidine),
2,2'-azobis[N-(2-carboxyéthyl)-2-méthylpropionamidine] hydratée,
dichlorhydrate de 2,2'-azobis{2-[1-(2-hydroxyéthyl)-2-imidazolin-2-yl]propane}, et
2,2'-azobis[2-(2-imidazolin-2-yl)propane].

5. Population de particules de microcapsules selon la revendication 1 dans laquelle l'initiateur en phase aqueuse est choisi dans le groupe de initiateurs selon la formule II.

6. Population de microcapsules selon la revendication 5 dans laquelle les initiateurs en phase aqueuse sont choisis dans le groupe constitué de :
2,2'-azobis{2-méthyl-N-[1,1-bis(hydroxyméthyl)-2-hydroxyethl]propionamide},
2,2'-azobis[2-méthyl-N-[2-hydroxyéthyl)propionamide],
2,2'-azobis{2-méthyl-N-[1,1-bis(hydroxyméthyl)-2-hydroxyéthyl]propionamide, et
2,2'-azobis[2-méthyl-N-(2-hydroxyéthyl)propionamide.

7. Population de particules de microcapsules selon la revendication 1 dans laquelle l'initiateur en phase aqueuse est choisi dans le groupe d'initiateurs selon la formule III.

8. Population de microcapsules selon la revendication 7 dans laquelle les initiateurs en phase aqueuse sont choisis dans le groupe constitué des :
acide 4,4'-(1,2-diazenediyl)bis[4-cyanopentanoïque],
acide 7,7'-(1,2-diazenediyl)bis[7-cyanooctanionique], et
acide 3,3'-(1,2-diazenediyl)bis[3-cyanobutanoïque].

9. Population de microcapsules selon la revendication 1 dans laquelle les monomères et oligomères d'acrylate ou méthacrylate multifonctionnels comportent au moins deux groupes vinyle.

10. Population de microcapsules selon la revendication 9 dans laquelle les monomères et oligomères d'acrylate ou méthacrylate multifonctionnels sont constitués d'au moins deux monomères et oligomères d'acrylate multifonctionnels.

11. Population de microcapsules selon la revendication 1 dans laquelle l'émulsifiant de phase aqueuse comprend un matériau soluble ou dispersible dans l'eau à un pH de 8 à 10.

12. Population de microcapsules selon la revendication 1 dans laquelle l'émulsifiant de phase aqueuse a un poids moléculaire supérieur à 100 et est choisi parmi des polymères comportant une fonctionnalité hydroxyle, éther, ester ou cétone.

13. Procédé de formation d'une population de microcapsules comprenant un matériau de noyau fluide et un matériau de paroi entourant au moins partiellement le matériau de noyau, la population de microcapsules étant formée par :
fourniture d'un matériau de noyau fluide liposoluble ou d'une particule solide dispersible dans l'huile dispersée dans un matériau de noyau fluide ;
fourniture d'une phase huileuse interne comprenant un diluant choisi parmi des esters de glycérol et des acides gras, où au moins un des acides gras est en C₁₂ ou plus, division de la phase huileuse interne en huile 1 et huile 2 ;
dispersion dans l'huile 1 d'un initiateur ;
dispersion dans l'huile 2 d'un monomère ou oligomère d'acrylate ou méthacrylate multifonctionnel, sensiblement exempt d'acrylate d'amine ou de méthacrylate d'amine, et dispersion dans l'huile 2 du matériau de noyau fluide liposoluble ou de la particule solide dispersible dans l'huile dispersée dans un matériau de noyau fluide ;
chauffage suffisant pour activer l'initiateur de l'huile 1
combinaison de l'huile 1 et l'huile 2 de façon à former une phase huileuse interne combinée et en laissant la réaction se produire pendant un temps suffisant pour prépolymériser les monomères ou oligomères multifonctionnels de l'huile 2 ;
fourniture d'une phase aqueuse comprenant un émulsifiant en phase aqueuse, l'émulsifiant comprenant un matériau soluble ou dispersible dans l'eau à un pH de 4 à 12, et un initiateur soluble ou dispersible dans l'eau des formules I, II ou III ; 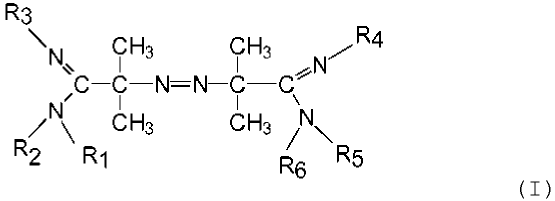 dans laquelle R₂, R₃, R₄ et R₅ sont chacun indépendamment choisis parmi hydrogène, alkylcarboxy, ou, R₂ et R₃ sont conjointement de deux à quatre carbones et forment une structure cyclique, et R₄ et R₅ sont conjointement de deux à quatre carbones et forment une structure cyclique ;
dans laquelle R₁ et R₆ sont chacun hydrogène à condition que lorsque R₃ et R₄ sont hydrogène, R₁ et R₆ soient une structure d'anneau cyclique de quatre carbones, 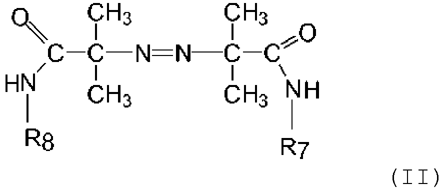 dans laquelle chacun de R₇ et R₈ est chacun indépendamment alkylhydroxy d'un à trois fragments hydroxyle et le fragment alkyle étant de C₁ à C₇, ou, 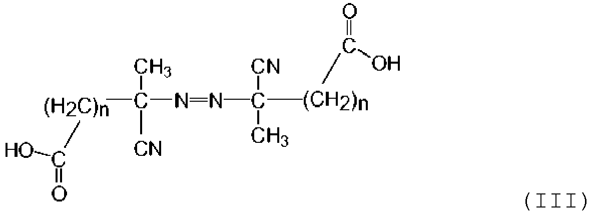 dans laquelle n est un entier de 1 à 5,
chauffage suffisant pour activer l'initiateur de la phase aqueuse
formation d'un mélange par dispersion de la phase huileuse interne combinée dans la phase aqueuse ;
émulsification du mélange par soumission du mélange à une agitation à cisaillement élevé ;
chauffage du mélange pendant un temps et à une température suffisants pour que l'acrylate ou
méthacrylate multifonctionnel soit polymérisé plus avant et migre vers l'interface des phases huileuse et aqueuse de façon à entourer le matériau de noyau dans la phase huileuse et former le matériau de paroi ; puis
chauffage pour générer des radicaux libres additionnels d'initiateurs de formules I, II, ou III dans la phase aqueuse, de façon à réticuler le matériau de paroi entourant le matériau de noyau,
où le rapport de l'initiateur en phase aqueuse à l'acrylate ou méthacrylate multifonctionnel est de 0,1:99,9 à 20:80 en poids,
où le rapport du diluant au matériau de noyau est de 0,1:99,9 à 90:10 sur une base en poids.

14. Procédé de formation d'une population de microcapsules selon la revendication 13 dans lequel une charge est conférée, à un niveau et d'un type de charge sélectionnés, à la paroi de microcapsule modifiée par addition de groupes fonctionnels acides ou amines par un ou plusieurs des initiateurs solubles dans l'eau des formules I, II ou III.
